Europäisches Patentamt

European Patent Office

Office européen des brevets

(11) Numéro de publication: **0 197 818**
**A1**

(12) **DEMANDE DE BREVET EUROPEEN**

(21) Numéro de dépôt: **86400530.1**

(22) Date de dépôt: **12.03.86**

(51) Int. Cl.⁴: **F 16 L 37/28**

(30) Priorité: **18.03.85 FR 8503969**

(43) Date de publication de la demande:
**15.10.86 Bulletin 86/42**

(84) Etats contractants désignés:
**DE GB IT**

(71) Demandeur: **SOCAPEX**
**10 bis, quai Léon Blum**
**F-92153 Suresnes(FR)**

(72) Inventeur: **Bricaud, Hervé**
**5, rue de Saint Germain**
**F-78370 Plaisir(FR)**

(72) Inventeur: **l'Henaff, Patrick**
**9, rue Louis Duperrey**
**F-94320 Thiais(FR)**

(74) Mandataire: **Brullé, Jean et al,**
**Service Brevets Bendix 44, rue François 1er**
**F-75008 Paris(FR)**

(54) **Connecteur fluidique miniature.**

(57) La présent invention concerne un connecteur fluidique miniature.

Ce connecteur fluidique miniature s'adaptant dans un connecteur du type comportant une fiche (2), et une embase (4) munies chacune d'alvéoles (135, 135') comporte un contact fluidique mâle (5) et un contact fluidique femelle (3), le contact fluidique mâle étant constitué par un corps de contact (68') permettant le passage due fluide qui est destiné à s'encastrer dans une alvéole (135) de la fiche ou de l'embase du connecteur électrique, le corps de contact se prolongeant d'un côté par un embout mâle (101) et le contact fluidique femelle étant constitué par un corps de contact (68) permettant le passage du fluide, destiné à s'encastrer dans une alvéole (135') de l'autre élément du connecteur électrique, le corps de contact se prolongeant d'un côté par un embout femelle (69) conformé pour recevoir l'embout mâle, l'embout mâle et/ou femelle faisant en partie saillie par rapport à l'extrémité de l'alvéole de sorte que, lors de l'accouplement, les extrémités (133, 133') des alvéoles de la fiche et de l'embse du connecteur électrique soient sensiblement en appui l'une contre l'autre.

Application aux cartes à circuit imprimé refroidies par circulation de fluide.

## FIG_1

EP 0 197 818 A1

## CONNECTEUR FLUIDIQUE MINIATURE

La présente invention concerne un connecteur fluidique miniature, plus particulièrement un connecteur fluidique miniature s'adaptant dans un connecteur électrique du type comportant une fiche et une embase munies chacune d'alvéoles.

Ce type de connecteur est utilisé en particulier avec des cartes imprimées à échangeur thermique incorporé du type comportant un drain thermique muni d'un système de canalisation pour assurer la connexion fluidique du réseau de canalisation de fluide caloporteur du drain de la carte imprimée avec le circuit fluidique intégré au bâti de l'équipement électronique. Une carte de ce type a été décrite notamment, dans la demande de brevet français déposée le même jour que la présente demande pour "CARTE A CIRCUIT IMPRIME A ECHANGEUR THERMIQUE ET PROCEDE DE FABRICATION D'UNE TELLE CARTE".

Il existe actuellement sur le marché différents types de raccords fluidiques miniatures. Toutefois, ces raccords ne peuvent pas être montés dans un connecteur électrique d'entrée/sortie de type standard tel que les connecteurs répondant par exemple aux normes HE8, HE9, HE11.

La présente invention a donc pour but de remédier à cet inconvénient.

En conséquence, le connecteur fluidique miniature conforme à la présente invention s'adaptant dans un connecteur électrique du type comportant une fiche et une embase munies chacune d'alvéoles, est caractérisé en ce qu'il comporte un contact fluidique mâle et un contact fluidique femelle, le contact fluidique mâle étant constitué par un corps de contact permettant le passage du fluide qui est destiné à s'encastrer dans une alvéole de la fiche ou de l'embase du connecteur électrique, le corps de contact se prolongeant d'un côté par un embout mâle et le contact fluidique femelle étant constitué par un corps de contact permettant le passage du fluide, destiné à s'encastrer dans une alvéole de l'autre élément du connecteur électrique, le corps de contact se prolongeant d'un côté par un embout femelle conformé pour recevoir l'embout mâle, l'embout mâle et/ou l'embout femelle faisant en partie saillie par rapport à l'extrémité de l'alvéole de sorte que, lors de l'accouplement, les extrémités des alvéoles de la fiche et de l'embase du connecteur électrique soient sensiblement en appui l'une contre l'autre.

Ainsi, les contacts fluidiques conformes à la présente invention sont adaptés aux alvéoles des connecteurs d'entrée/sortie existants sans aucune modification. D'autre part, le contact fluidique conforme à l'invention ressemble aux contacts conventionnels tels que contacts de puissance, contacts coaxiaux ou contacts optiques habituellement montés dans lesdites alvéoles, en ce qui concerne ses dimensions et son aspect extérieur.

Selon une autre caractéristique de la présente invention, le connecteur fluidique miniature est un connecteur auto-obturant. En conséquence, le corps de contact du contact fluidique mâle et/ou du contact fluidique femelle comporte une chambre interne destinée à recevoir un dispositif auto-obturant.

Différents types de dispositifs auto-obturants peuvent être montés dans la chambre interne du corps de contact du contact mâle ou du contact femelle. Selon un mode de réalisation préférentiel, le dispositif auto-obturant est constitué par un clapet, un dispositif élastique sollicitant le clapet en position de fermeture pour empêcher le passage du fluide, un moyen pour, lors de l'accouplement, amener le clapet en position d'ouverture pour permettre le passage du fluide et un dispositif d'étanchéité interne pour en position de fermeture empêcher le passage du fluide hors du corps de contact vers l'embout.

Le clapet peut être réalisé de diverses manières. Ainsi, selon un mode de réalisation préférentiel, le clapet est constitué par une jupe coulissant dans la chambre interne du corps de contact et recevant le dispositif élastique, ladite jupe se prolongeant par une partie de diamètre inférieur munie d'au moins un orifice sur sa périphérie pour permettre le passage du fluide entre le logement interne de la jupe et la chambre interne du corps de contact, ladite partie se terminant par un cône de fermeture. Selon un autre mode de réalisation, le clapet est constitué par une pièce massive montée à l'extrémité d'un arbre de guidage sur lequel est positionné le dispositif élastique, cet arbre de guidage coulissant dans un palier monté dans le corps de contact et muni d'au moins un orifice pour le passage du fluide caloporteur.

Selon encore un autre mode de réalisation, le clapet peut être constitué de manière connue par une bille montée à l'extrémité du dispositif élastique qui dans ce cas est de préférence constitué par un ressort à boudin cônique, le dispositif élastique étant maintenu en position dans le corps de contact par des épaulements.

Selon encore un autre mode de réalisation, le clapet peut être constitué par un clapet à tiroir.

D'autre part, le moyen pour, lors de l'accouplement, amener le clapet en position d'ouverture pour permettre le passage du fluide est constitué de préférence par une tige de commande faisant saillie à partir de l'extrémité du clapet dans l'embout mâle et/ou femelle.

Selon une autre caractéristique de la présente invention, l'extrémité du corps de contact opposée à celle de l'embout est montée dans un raccord permettant le raccordement à une carte imprimée comportant un échangeur thermique incorporé constitué par un drain présentant un réseau de canalisation pour la circulation du fluide caloporteur.

Le connecteur fluidique décrit ci-dessus présente de nombreux avantages. En particulier, son encombrement est très faible et les contacts fluidiques le constituant sont compatibles avec les alvéoles normalisées de la fiche ou de l'embase des connecteurs électriques existants.

D'autre part, le dépassement d'un ou des deux contacts fluidiques par rapport à l'extrémité avant de la fiche ou de l'embase du connecteur est compatible avec le bon fonctionnement des guides et des détrompeurs dudit connecteur. De plus, chaque contact fluidique comporte un faible nombre de pièces, il est donc d'une conception très simple, donc peu onéreux, fiable et robuste.

D'autre part, dans le cas de connecteurs fluidiques miniatures auto-obturants, il est possible de réaliser l'insertion et la désinsertion d'une carte sans perte de fluide et sans arrêter la circulation du fluide dans le bâti et les autres cartes. De plus, le contact fluidique fonctionne avec des pertes de charges minimales au passage du fluide malgré les très faibles dimensions imposées par les alvéoles des connecteurs électriques. Il présente une bonne tenue à la pression exercée par le fluide caloporteur aussi bien en position accouplée qu'en position désaccouplée. Il n'y a pas de perte de fluide ni du côté de l'embase du connecteur ni du côté de la fiche lors de l'accouplement ou du désaccouplement de la carte. Le nombre de manoeuvres d'accouplement et de désaccouplement peut être élevé et compatible avec les exigences des connecteurs conventionnels. Il accepte aussi, au moment de l'accouplement, un désalignement angulaire identique à ceux généralement admis pour les contacts conventionnels. Il peut être réalisé en des matériaux compatibles chimiquement avec la nature du fluide caloporteur.

D'autres caractéristiques et avantages de la présente invention apparaîtront à la lecture de la description de différents modes de réalisation faite ci-après avec référence aux dessins ci-annexés dans lesquels :

- la figure 1 est une vue en coupe d'un connecteur fluidique conforme à la présente invention en position désacouplée ;

- la figure 2 est une vue en coupe du connecteur fluidique de figure 1 en position accouplée ;

- la figure 3 est une vue en coupe partielle d'un contact fluidique monté dans la fiche d'un connecteur électrique fixé sur une carte à circulation de fluide représentant une variante de la liaison étanche entre le corps de contact et le raccord ;

- la figure 4 est une vue en perspective d'un mode de réalisation d'un clips de rétention du contact fluidique dans l'alvéole du connecteur électrique ;

- la figure 5 est une vue en coupe partielle montrant un autre mode

5

de réalisation du raccordement du contact fluidique sur la carte imprimée ;

- la figure 6 est une vue en coupe partielle montrant encore un autre mode de réalisation du raccordement du contact fluidique avec la carte imprimée ;

- la figure 7 est une vue en coupe partielle d'encore un autre mode de réalisation du raccordement du contact fluidique avec la carte imprimée ;

- la figure 8 est une vue en coupe partielle d'un autre mode de réalisation d'un connecteur fluidique conforme à la présente invention en position accouplée ;

- la figure 9 est une vue en coupe d'un troisième mode de réalisation d'un connecteur fluidique conforme à la présente invention ;

- la figure 10 est une vue en coupe d'un quatrième mode de réalisation d'un connecteur fluidique conforme à la présente invention en position accouplée.

Dans les figures, pour simplifier la description, les mêmes éléments portent les mêmes références.

Sur les différentes figures, on a représenté le cas d'un connecteur fluidique conforme à la présente invention monté dans les alvéoles d'un connecteur électrique d'entrée/sortie de carte imprimée, cette carte imprimée étant refroidie par circulation d'un fluide caloporteur. Toutefois, il est évident pour l'homme de l'art que le connecteur fluidique de la présente invention peut être monté dans d'autres types de connecteurs électriques tels que des connecteurs rectangulaires, des connecteurs cylindriques ou similaires.

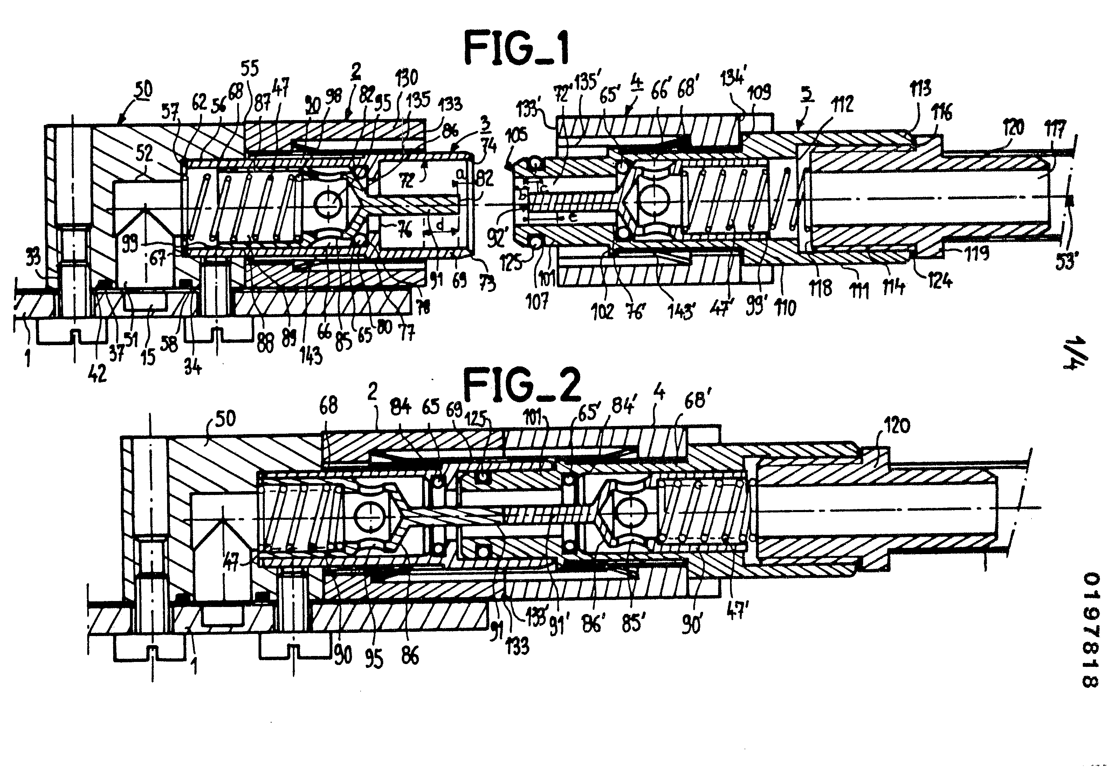

Sur la figure 1, on a représenté un connecteur fluidique conforme à la présente invention, comportant un contact fluidique femelle monté dans la fiche 2 du connecteur électrique et raccordé au circuit de canalisation d'une carte à circuit imprimé refroidie par circulation de fluide et un contact fluidique mâle 5 monté dans l'embase 4 dudit connecteur. Il est évident pour l'homme de l'art que le contact fluidique mâle et le contact fluidique femelle peuvent être montés de manière inversée en adoptant les raccords adéquats.

On décrira tout d'abord le contact fluidique femelle 3 représenté sur la partie gauche des figures 1 et 2. Ce contact fluidique est constitué essentiellement d'un corps de contact 68 dont la partie externe assure l'encastrement du contact fluidique dans l'alvéole 135 de la fiche 2 du connecteur électrique et dont la partie interne est munie d'un dispositif auto-obturant décrit ci-après, ce corps de contact 68 se prolongeant par un embout femelle 69 assurant la connexion semi-permanente avec le contact de sexe opposé monté dans l'embase du connecteur. L'embout femelle 69 et le corps de contact 68 se présentent sous la forme de deux tubes cylindriques coaxiaux liés l'un à l'autre, mais de diamètre différent. Le diamètre externe de l'embout femelle 69 est supérieur au diamètre externe du corps de contact 68 de manière à former un épaulement 77 permettant le maintien en position d'un clips 143 destiné à assurer la fixation du contact fluidique 3 dans l'alvéole de la fiche 2 du connecteur électrique. D'autre part, le corps de contact 68 et l'embout femelle 69 sont séparés par une cloison interne munie d'un orifice de communication 76.

La cavité interne 72 de l'embout femelle 69 du contact femelle 3 est destinée à recevoir l'embout mâle 101 du contact mâle 5 lors de l'accouplement des deux contacts. Aussi, afin de faciliter cet accouplement, le bord interne de l'entrée de la cavité 72 présente un arrondi 74 qui aide à l'engagement de l'embout mâle 101, en corrigeant un éventuel mésalignement de celui-ci par rapport à l'axe 53 du contact femelle et qui évite de blesser le joint d'étanchéité prévu sur l'embout mâle du contact mâle lorsque celui-ci s'engage dans la cavité 72. D'autre part, le bord externe de l'entrée de la cavité 72 présente un chanfrein 73 qui aide à l'engagement du contour externe de l'embout femelle dans l'alvéole 135' de l'embase 4 du connecteur de la carte mère ou du châssis.

Dans le cas du connecteur fluidique des figures 1 et 2, le contact fluidique femelle comporte un dispositif auto-obturant. Il est toutefois envisageable sans sortir du cadre de la présente invention, d'avoir un contact fluidique sans dispositif auto-obturant.

Ce dispositif auto-obturant est constitué essentiellement d'un clapet 90, d'un dispositif élastique sollicitant le clapet en position de fermeture pour empêcher le passage du fluide en position désaccouplée, ce dispositif élastique étant constitué par un ressort à boudin de compression 47 dans le mode de réalisation représenté, d'un moyen pour, lors de l'accouplement, amener le clapet en position d'ouverture pour permettre le passage du fluide, ce moyen étant constitué par exemple par une tige de commande 91 prolongeant l'extrémité du clapet et d'un dispositif d'étanchéité interne constitué par exemple par un joint d'étanchéité 65. Ce dispositif auto-obturant est monté dans la chambre interne 66 du corps de contact 68. Selon un premier mode de réalisation, le clapet 90 qui est réalisé en une seule pièce est constitué essentiellement par une jupe cylindrique 87 dont le contour externe de guidage 88 coulisse dans la chambre interne 66 du corps de contact 68 et dont le logement interne 89 reçoit le ressort de compression 47. Cette jupe cylindrque 87 se prolonge par une partie 85 de diamètre inférieur à celui de la jupe munie sur sa périphérie d'orifices 95 pour permettre le passage du fluide entre le logement interne de la jupe 87 et la chambre interne du corps de contact 68. Cette partie 85 se termine par un cône de fermeture 86. Dans le mode de réalisation représenté, le cône de fermeture 86 se prolonge par une tige de commande 91 de diamètre inférieur à celui du trou de communication 76 entre le corps de contact et l'embout femelle. Cette tige de commande 91 est coaxiale à l'axe du corps de contact et fait saillie dans le logement interne 72 de l'embout femelle de manière à coopérer avec la tige de commande correspondante du contact mâle 5 lors de l'accouplement de ces contacts pour repousser le clapet 90 vers l'extrémité opposée de la chambre interne du corps de contact et ainsi désobturer le contact pour établir la connexion fluidique.

Un épaulement 98 est réalisé au niveau de la jonction entre la jupe cylindrique 87 et la partie 85, cet épaulement 98 sert de butée au ressort de compression 47 monté à l'intérieur du logement interne 89 de la jupe 87.

En position désaccouplée, comme représenté sur la figure 1, le ressort 47 comprime la face d'appui du cône de fermeture 86 sur le joint d'étanchéité interne 65 qui est lui-même plaqué contre le fond 78 de la chambre interne 66, établissant ainsi l'auto-obturation du contact fluidique 3 en position de désaccouplée. A l'action du ressort de compression 47 s'ajoute la poussée due à la pression du fluide caloporteur.

Le joint d'étanchéité interne 65 est, par exemple, un joint torique réalisé en un matériau élastomère tel que du mitrile, du fluorocarbone, du silicone, ce matériau étant capable de résister chimiquement à l'agression des divers types de fluides caloporteurs. Le joint 65 est placé dans une gorge 80 prévue contre le fond 78 de la chambre interne 66 du corps de contact, ceci afin d'éviter son déplacement à l'intérieur dudit logement en provoquant des à coups ou des "coups de bélier" dans les canalisations de circulation de fluide caloporteur. De préférence, comme représenté sur la figure 1, cette gorge est obtenue à l'aide d'un épaulement 82 réalisé à partir de la paroi de la chambre interne 66, le diamètre du sommet de cet épaulement étant très légèrement supérieur à celui du contour externe de la partie 85 du clapet. Ainsi, lors de l'opération de désaccouplement, l'étranglement du passage du fluide généré par le sommet de l'épaulement et le contour externe de la partie 85 qui se trouve alors au même niveau crée, au début de l'auto-obturation du contact fluidique, une chute de pression du fluide juste avant que le joint d'étanchéité 65 soit comprimé par le cône de fermeture 86 du clapet et établisse l'obturation étanche du contact. Cette chute de pression créée pendant la phase d'auto-obturation du contact augmente l'efficacité et la durée de vie du joint d'étanchéité 65. Pour faciliter la mise en place du joint 65 dans la gorge 80, lors de la fabrication du contact fluidique, l'épaulement de la gorge présente de préférence un chanfrein d'engagement 84 du côté de l'épaulement opposé à la paroi de la gorge. Il est à noter qu'en position accouplée, telle que représentée sur la figure 2, l'épaulement de la gorge n'engendre aucune perturbation sur la circulation du fluide caloporteur.

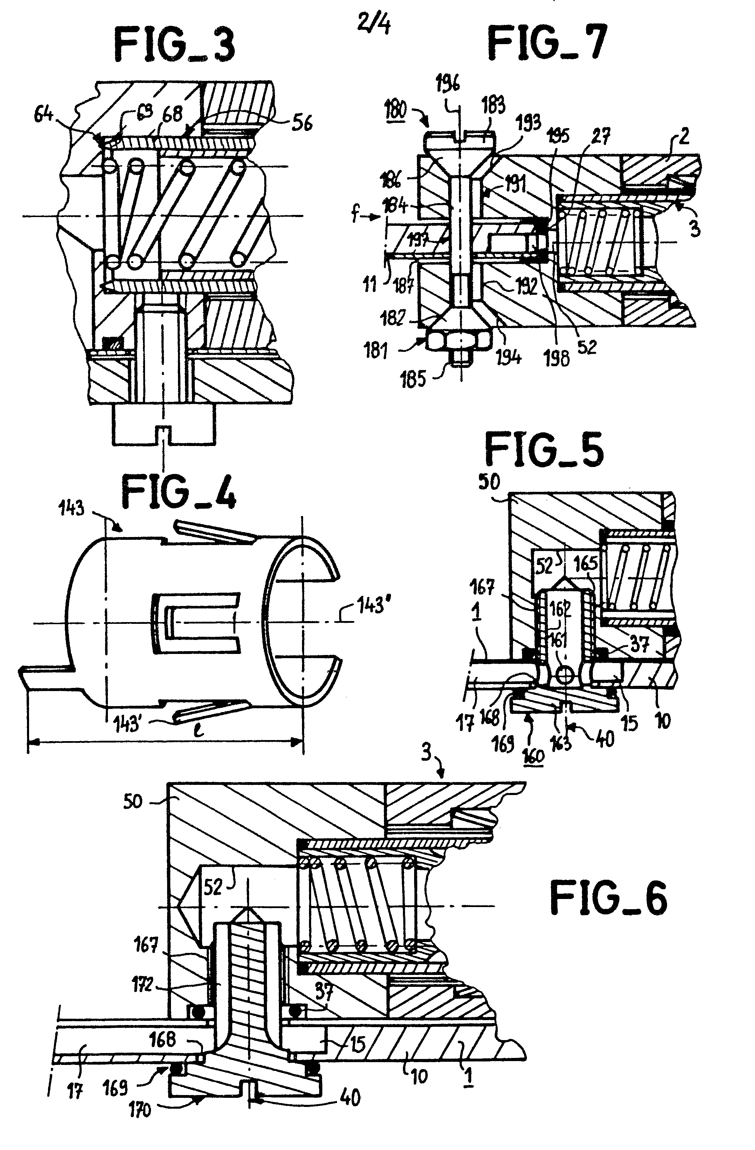

L'extrémité du corps de contact opposée à l'embout femelle 69 est encastrée dans un logement 56 d'un raccord 50 assurant le raccordement fluidique du contact 3 avec le réseau de canalisation de la carte fille à circulation de fluide. Dans l'exemple représenté à la figure 1, cet encastrement est obtenu par emmanchement à force du corps de contact 68 dans le raccord 50, les diamètres en regard des deux éléments se présentant suivant un ajustement serré. Pour garantir l'étanchéïté de la liaison entre le raccord 50 et le corps de contact 68, un joint annulaire 62 est placé au fond du logement 56 du raccord 50. Le joint 62 est comprimé par l'extrémité 67 du corps de contact 68. La compression du joint 62 est obtenue lors de l'opération d'emmanchement à force du corps 68 dans le raccord 50 et maintenue grâce aux forces de rétention élevées de l'emmanchement. Cette étanchéïté peut être également obtenue par une liaison intermétallique d'étanchéïté 63, 64 comme représenté sur la figure 3. L'étanchéïté et la fixation du raccord 50 sur le corps de contact 68 peuvent aussi être réalisées par des opérations de collage, brasage ou frettage.

Dans le mode de réalisation représenté, le raccord 50 se présente sous la forme d'un bloc parallélépipédique dont une des faces 55 est percée d'un trou étagé non débouchant sur la face arrière. Ce trou étagé se compose du logement d'encastrement 56 de même diamètre que le contour externe du corps de contact 68 et d'un conduit interne 52 qui est concentrique au logement 56 et qui a un diamètre légèrement inférieur au diamètre interne du ressort 47 de manière à ce que l'épaulement entre le conduit interne et le logement forme une butée pour l'extrémité dudit ressort et du joint 62.

Une des faces perpendiculaire à la face 55, à savoir la face 58 qui vient en appui sur la carte 1, est percée d'un trou 51 non débouchant de telle sorte que le trou 51 et le conduit interne 52 soient sécant et débouchent l'un dans l'autre. Cette face 58 est également percée de deux trous taraudés 33 et 34 situés de part et

10

d'autre du trou 51. Ces trous taraudés 33 et 34 sont utilisés pour la fixation du raccord 50 sur la carte imprimée 1 comme représenté sur les figures 1 et 2. D'autre part, la face 58 est munie d'une gorge annulaire 42 concentrique au trou 51 qui sert de logement à un joint annulaire 37 qui assure l'étanchéîté entre le raccord 50 du contact fluidique 3 et l'extrémité 15 du réseau de canalisation de la carte 1 à circulation de fluide.

Comme déjà mentionné, le contour externe de l'embout femelle 69 a un diamètre légèrement inférieur à celui du contour externe du corps de contact 68. Les deux contours externes se raccordent par une face d'arrêt 77 dont le plan est perpendiculaire à l'axe. Lorsque le corps de contact a été emmanché dans le raccord 50, la partie de longueur "l" du contour externe du corps de contact située entre les faces d'arrêt 77 et 55 est utilisée pour placer un clips de rétention 143 qui permet de verrouiller le contact fluidique 3 dans l'alvéole 135 de l'isolant 130 du connecteur 2. Comme représenté sur la figure 4, ce clips de rétention se présente sous la forme d'un tube mince et élastique de longueur "l", fendue suivant une génératrice 143" et comportant sur son pourtour plusieurs pattes de rétention 143' en saillie et élastiquement déformables. Le clips est immobilisé en translation sur le corps de contact 68 par les faces d'arrêt 77 et 55.

On décrira maintenant le contact fluidique mâle 5 représenté sur les parties droites des figures 1 et 2. Ce contact mâle est constitué essentiellement d'un corps de contact 68' de forme cylindrique, qui se prolonge par un embout mâle 101 se présentant sous la forme d'un tube métallique muni sur sa surface externe d'une gorge 107 servant de logement à un joint d'étanchéîté 125. Le diamètre du contour externe de l'embout mâle 101 est très légèrement inférieur à celui de la cavité 72 de l'embout femelle 69 du contact femelle. Le diamètre extérieur du joint 125 monté dans son logement est très légèrement supérieur à celui de la cavité 72 de façon à être comprimé sur son pourtour lorsqu'il est engagé dans celle-ci et assurer ainsi l'étanchéîté de la connexion fluidique. D'autre part, l'extrémité de l'embout mâle 101 présente de préférence un chanfrein d'entrée 106. Ce chanfrein d'entrée 106 coopère avec l'arrondi 74 pour faciliter l'engagement de l'embout mâle 101 dans la cavité 72 du contact femelle 3. De plus, le diamètre du trou 76' de l'embout mâle 101 est égale ou voisin du diamètre du trou de communication 76 de l'embout femelle 69 pour permettre le passage du fluide caloporteur suivant une section sensiblement constante à travers la connexion fluidique.

La longueur de l'embout mâle 101 séparant sa face avant 105 et la face d'arrêt 102 est sensiblement égale à celle de la profondeur de la capacité interne 72 de l'embout femelle 69.

Le dispositif auto-obturant contenu dans la chambre interne 66' du corps de contact 68' du contact mâle 5 de l'embase 4 est identique à celui du contact femelle 3 de la fiche 2. En conséquence il ne sera pas décrit ici et les mêmes éléments porteront les mêmes références munies d'un prime. D'autre part, le contour externe du corps de contact 68' muni du clips de verrouillage du contact 5 dans l'alvéole 135' de l'embase 4 est identique à celui du contact 3 de la fiche 2 à la différence près que l'une des extrémités du clips vient en appui sur la face d'appui 109 du corps de contact 5 au lieu de la face d'appui 55 du raccord 50 pour le contact 3 de la fiche 2.

Le raccordement fluidique du contact 5 de l'embase diffère de celui du contact 3 de la fiche par le fait que le contact 5 est directement branché sur le dispositif d'alimentation du fluide caloporteur de l'équipement électronique. Aussi, le corps de contact 68' se prolonge, du côté opposé à celui de l'embout mâle, par une douille de raccordement 110 dont le contour externe 111 est supérieur au contour externe 79' du corps de contact 68'.

Les contours externes 111 et 79' se raccordent par une face d'appui 109 perpendiculaire à l'axe du corps de contact. Lors du montage, cette face 109 vient en appui sur la face arrière 134' de l'isolant de l'embase 4. La douille 111 présente une cavité interne 112 en communication avec la chambre interne 66' du corps de contact et dans son prolongement. Cette cavité 112 débouche à l'extrémité du corps de contact. Le diamètre de la cavité 112 qui présente un taraudage 114 est supérieur à celui de la chambre interne 66'. La cavité 112 reçoit le raccord 120 du système d'alimentation du fluide. Celui-ci se présente sous la forme d'un tube muni d'un filetage 116 qui vient se monter dans le taraudage 114 jusqu'à ce que la collerette 119 du raccord 120 vienne comprimer un joint d'étanchéité annulaire 124 intercalé entre elle-même et l'extrémité 113 de la douille 111. Le raccord 120 a un alésage 117 dont le diamètre est légèrement inférieur au diamètre interne du ressort de compression 47'. La face avant 118 du raccord 120 sert d'appui à la spire d'extrémité du ressort 47'.

Sur la figure 1, on a représenté une vue en coupe du système de connexion fluidique en position désaccouplée. On remarquera que dans ce cas, les faces d'appui 92 et 92' des tiges de commande des clapets des contacts fluidiques sont de préférence en retrait par rapport aux extrémités de ceux-ci, c'est-à-dire respectivement par rapport à l'arrondi de protection 74 de l'embout femelle du contact femelle et à la face avant de l'embout mâle 101 du contact mâle. En effet, si en position désaccouplée, l'un des contacts fluidiques présente une tige de clapet protubérante par rapport à l'extrémité du contact, la garantie d'auto-obturation de celui-ci est mal assurée car la tige de commande risque d'être malencontreusement manoeuvrée au contact d'un objet et de provoquer ainsi une fuite du fluide caloporteur. Dans le cas de l'exemple décrit, les tiges de commande qui demeurent à l'intérieur des cavités 72 et 72' sont naturellement à l'abri d'un tel risque. Par ailleurs, si les deux tiges de commande des contacts mâle et femelle sont protubérantes à l'état désaccouplé, il n'est pas possible de les désaccoupler sans provoquer de fuite de fluide. En conséquence, les tiges de commande sont en retrait d'une longueur "a" par rapport à l'arrondi de protection 74 du contact mâle et d'une longueur "b" par rapport à la face avant 105 du contact mâle.

Afin que la connexion et la déconnexion se fassent sans fuite de fluide caloporteur, il est nécessaire que le joint d'étanchéité 125

13

puisse glisser sur le contour interne de la cavité interne 72 avant que les faces d'appui 92, 92' des tiges de commande viennent en contact au moment de la connexion. Cela implique :

- 1°) a est supérieur à c si la face 92' est située entre la face 105 et le plan de symétrie du joint 125, c étant la distance entre ce plan de symétrie et la face 92' ;

- 2°) ou que la face 92' soit en retrait par rapport au plan de symétrie du joint 125.

Sur la figure 2, on a représenté une vue en coupe de l'ensemble du système de connexion fluidique en position accouplée. La condition essentielle pour que la connexion fluidique soit assurée en position accouplée, est que les cônes de fermeture 86, 86' des clapets 90, 90' ne soient plus en appui sur les joints d'étanchéïté 65, 65'. Or, en fonction des conditions de pression et du sens de circulation du fluide caloporteur, ainsi que des efforts de compression respectifs des ressorts 47 et 47', la cinématique du dispositif auto-obturant des contacts fluidique femelle et mâle peut se faire de façon différente au moment de la connexion de ceux-ci.

Ainsi, ou bien les deux clapets 90 et 90' s'ouvrent conjointement dès que leurs tiges de commande viennent en appui l'une sur l'autre et alors la connexion fluidique est aussitôt assurée, ou bien l'un des deux clapets 90 ou 90' s'ouvre d'abord complètement jusqu'à ce que sa base 99 vienne en appui au fond de ce logement, puis commence l'ouverture du second. Ce n'est alors qu'à ce moment que la connexion fluidique est assurée.

La pénétration du contact mâle 5 dans le contact femelle 3 est limitée par la mise en appui des faces avant 133 et 133' des isolants respectifs de la fiche et de l'embase du connecteur électrique. Ainsi, pour assurer la connexion fluidique dans tous les cas de figure, il faut que la somme algébrique "d + e" soit supérieure à la plus élevée des deux valeurs "f", "g", dans lesquelles :

- "d" est la distance entre les faces 92 et 133 à l'état désaccouplé et
- "e" est la distance entre les faces 92' et 133' à l'état désaccouplé.
- ("d" ou "e" seront affectés d'un signe positif lorsque la face d'appui de la tige de commande du clapet dépasse le plan de la face avant de l'isolant et d'un signe négatif lorsqu'elle est en retrait par rapport à ce dernier).

- "f" est la distance entre la base 99 du clapet et le fond 57 à l'état désaccouplé

- "g" est la distance entre la base 99' du clapet et la face 118 à l'état désaccouplé

- ("f", "g" étant affectés d'un signe positif).

La différence $\Delta$ entre la somme algébrique "d + e" et la plus élevée des deux valeurs "f" et "g" constitue ce qu'on appelle la sécurité d'enfichage du connecteur.

Elle exprime d'écart maximal $\Delta$ entre les deux isolants 133 et 133' pour lequel la connexion fluidique est assurée. Les distances a, b, c, d, e, f, g seront de préférence déterminées de façon que la sécurité d'enfichage $\Delta$ de la connexion fluidique soit au moins égal à celui des autres contacts du connecteur électrique.

Sur les figures 5 à 7, on a représenté différentes variantes de réalisation du raccordement du contact fluidique 3 sur la carte fille 1. Sur la figure 5, la fixation mécanique du raccord 50 du contact fluidique 3 sur la carte 1 à circulation de fluide est réalisée par l'intermédiaire d'une vis creuse 160. Cette vis creuse 160 est montée dans l'orifice 51 muni d'un taraudage 167 du raccord 50 et se trouve située dans le passage du fluide caloporteur. De ce fait, la tige filetée 165 de la vis 160 présente un trou 162 d'axe 40 qui débouche dans le conduit interne 52 du raccord 50 et qui communique avec l'extrémité 15 du réseau de canalisation de la carte par l'intermédiaire de trous 161 d'axes perpendiculaires à l'axe 40 et percés dans la tige filetée 165 sous la tête 163 de la vis. D'autre part, le fond du canal 17 de la carte est percé d'un trou 168 pour le passage de la vis 160 et, de ce fait, il est nécessaire de placer un joint 169 dans un épaulement 164 de la tête de vis 163 pour assurer l'étanchéité du dispositif. En conséquence, la vis creuse 160 assure le serrage du raccord 50 sur la carte 1. De ce fait, une seule vis suffit pour assurer la fixation avec une garantie d'étanchéité efficace entre le raccord 50 et la carte 1 car le serrage est ainsi réparti uniformément sur le pourtour des joints.

Cette variante présente les avantages suivants :

- la réduction du nombre de vis de fixation et en conséquence la simplification du raccord 50 et la réduction de son encombrement ce qui augmente la surface utile pour l'implantation des composants sur la carte ;

- la simplification du réseau de canalisation de la plaque du drain thermique 10 car les extrémités 15 et 16 peuvent être situées directement dans le prolongement des canaux.

Sur la figure 6, on a représenté une vue en coupe d'un système de connexion fluidique semblable à celui de la figure 5, dans lequel une vis rainurée 170 est utilisée à la place de la vis 160. Dans ce cas, le passage du fluide caloporteur entre l'extrémité 15 du réseau de canalisation de la carte et le conduit interne 52 du raccord 50 se fait à travers les rainures 172 creusées longitudinalement à l'extérieur de la tige filetée de la vis rainurée 170 au lieu de se faire par le trou intérieur 162 de la vis creuse 160.

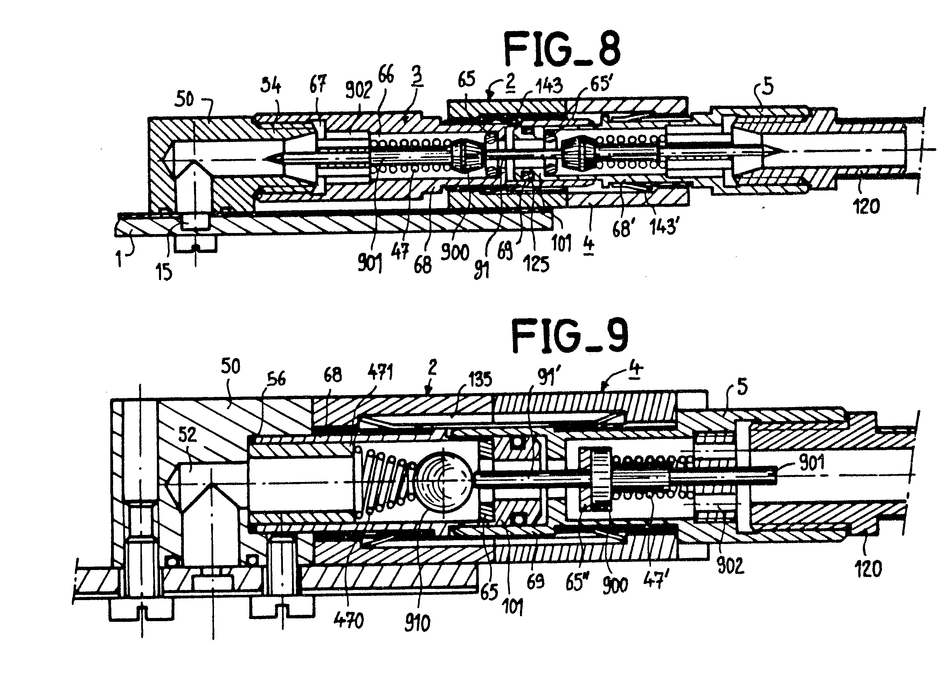

Sur la figure 7, on a représenté en coupe une vue d'un système de connexion fluidique raccordé sur le bord transversal 27 de la carte 1. Cette variante est utilisée notamment lorsque les bornes de sortie des contacts électriques de la fiche sont brasées à plat de part et d'autre de la carte 1 de sorte que le plan de ce dernier se trouve être sensiblement dans le prolongement du plan de symétrie de la fiche 2 au lieu d'être déporté d'un côté ou de l'autre comme représenté sur les autres figures. Dans ce cas, le raccord 50 présente une fente 187 dans l'axe du contact fluidique 3. Le raccord 50 est percé suivant un axe perpendiculairement à la fente 187. Le trou 191 de la partie supérieure du raccord débouche sur la face supérieure par un orifice chanfreiné 193. Le trou 192 de même axe que le trou 191 débouche sur la face inférieure par un orifice chanfreiné 194. L'extrémité 15 du réseau de canaux de la carte 1 est munie d'une ouverture 196 qui débouche sur le bord transversal 27 de la carte. Dans cette variante, aucun trou communiquant avec l'extrémité 15 n'est percé dans la plaque de fermeture 11. Un trou de guidage 197 est percé dans le prolongement de l'ouverture 198, mais en dehors du réseau de canalisation. Le raccordement de la carte 1 sur la fiche de connecteur 2 s'opère de la façon suivante. Un joint plat 195 est introduit au fond de la fente 187 du raccord 50 de telle façon que le trou du joint soit en vis-à-vis avec le conduit interne 52. La carte 1 est engagée simultanément dans la fente 187 du raccord 50 et entre les deux rangées de bornes de sortie des contacts électriques. Une vis à tête cônique 180 traversant les trous 191, 197 et 192 est introduite dans le raccord 50. Le diamètre de la partie lisse 184 de la tige filetée 185 de la vis 180 est égal au diamètre du trou 197 de la carte et inférieur au diamètre des trous 191 et 192.

A ce moment, l'axe 196 de la vis 180 est décalé vers la face arrière du raccord 50 par rapport à l'axe des trous 191 et 192. Un écrou cônique 181 est alors vissé sur la tige filetée 185 de la vis 180. Sous l'action du serrage de cet écrou, le cône d'appui 186 de la tête de la vis 183 et le cône d'appui 182 de l'écrou 181 coopèrent respectivement avec les orifices 193 et 194 pour déplacer la carte 1 dans le sens de la flèche vers le fond de la fente 187 du raccord 50. Lorsque le serrage complet de la vis et de l'écrou est réalisé, l'axe 196 de la vis 180 coïncide avec l'axe des trous 191 et 192 et le joint 195 est comprimé pour assurer l'étanchéïté du raccordement du contact fluidique sur la carte 1.

On décrira maintenant avec référence aux figures 8 à 10, différentes variantes de réalisation du dispositif auto-obturant, les autres parties du contact fluidiques étant sensiblement similaires à celles représentées sur les figures 1 et 2.

Dans le mode de réalisation de la figure 8, le clapet est constitué essentiellement par une pièce pleine 900 munie à sa partie arrière opposée à la tige de commande 91 d'un arbre de guidage 901 qui coulisse dans un palier 902 prévu à l'intérieur de la chambre interne 66 du corps de contact 68. Le palier est muni d'orifices longitudinaux pour le passage du fluide. Dans ce cas, le ressort de compression 47 est monté autour de l'arbre de guidage entre le palier 902 et la face arrière de la pièce pleine 900. De plus, le raccord 50' permettant le raccordement du contact fluidique 3 avec la carte présente une forme légèrement différente de celle du raccord 50 des figures 1 et 2.

Le corps de contact 68 n'est plus inséré dans un logement 56 débouchant sur une face du raccord 50 comme pour le mode de réalisation des figures 1 et 2, mais le corps de contact 68 présente à son extrémité arrière un logement interne taraudé 67 de diamètre supérieur au diamètre du logement interne 66 pour venir se visser sur une partie de raccord 54 filetée remplaçant le logement 56. Dans ce mode de réalisation, les mêmes dispositifs d'obturation sont prévus dans le contact fluidique mâle et dans le contact fluidique femelle, comme on le voit clairement sur la figure 8, à l'exception du fait que les tiges de commande des contacts mâle et femelle sont inégales mais respectent la somme algébrique "d + e" mentionnée ci-dessus.

Sur la figure 9, on a représenté une autre variante du dispositif d'obturation. Sur cette figure, le contact fluidique mâle est monté dans une alvéole 135 de la fiche 2 du connecteur électrique raccordé sur la carte fille tandis que le contact fluidique femelle est monté sur l'embase 4 dudit connecteur. Le dispositif d'obturation du contact fluidique mâle est essentiellement constitué d'une bille 910 actionnée par un ressort de compression 470 constitué de préférence par un ressort cônique pour mieux asseoir la bille en position. Cette bille fait office de clapet d'auto-obturation en venant comprimer un joint d'étanchéîté annulaire 65. D'autre part, le ressort de compression 470 est positionné entre la face arrière de la bille et un épaulement 471 réalisé par un tube cylindrique venant se positionner à l'intérieur de la chambre interne du corps de contact et prenant appui contre le fond du logement 56 du raccord 50 qui, dans ce mode de réalisation, est identique au raccord de la figure 1. De plus, le contact fluidique femelle est muni d'un clapet à écoulement externe sensiblement identique au clapet décrit avec référence à la figure 8,

aussi, ce clapet ne sera pas décrit en détail. Toutefois, le joint torique 65 est remplacé par un joint 65" monté sur la face avant du clapet 900. Dans ce cas, la bille n'est pas·munie d'une tige de commande, aussi la longueur de la tige de commande du clapet à écoulement externe aura une longueur égale à "d + e".

D'autres types de dispositifs d'obturation peuvent être envisagés. Ainsi, on peut envisager des clapets dits à tiroir.

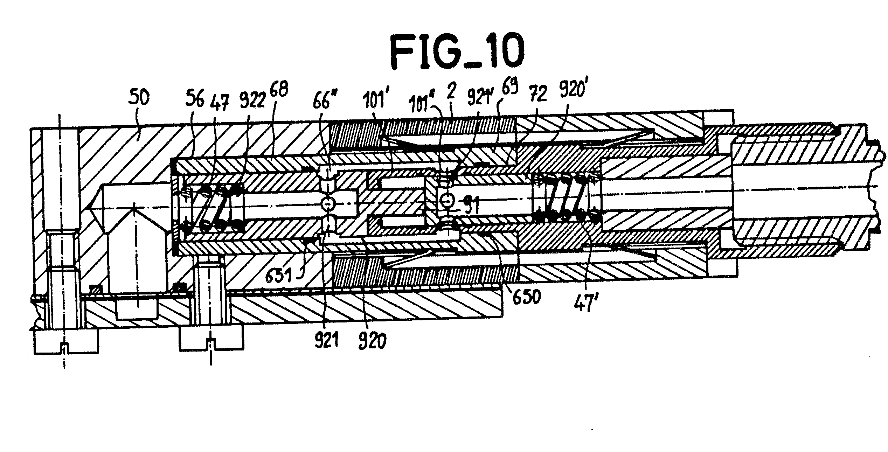

Un tel clapet est représenté, par exemple sur la figure 10.

Dans ce cas, le corps de contact 68 du contact fluidique femelle 3 présente une forme modifiée. En effet, la chambre interne 66 présente du côté de l'embout femelle une partie 66" de plus grand diamètre destinée au passage du fluide caloporteur lorsque les deux contacts sont accouplés. De plus, le diamètre de la cavité interne 72 de l'embout femelle est identique au diamètre de la partie arrière de la chambre interne. Comme représenté sur la figure, deux joints d'étanchéïté 650, 651 sont prévus dans des gorges réalisées respectivement dans la partie arrière de la chambre interne 66 et dans la cavité interne 72. Dans ce cas, le clapet est constitué par une pièce cylindrique 920 fermée à une extrémité dont le diamètre externe correspond au diamètre interne de la partie arrière de la chambre interne 66 et de la cavité interne de l'embout pour pouvoir coulisser à l'intérieur du corps 68 et de l'embout femelle.

D'autre part, cette pièce 920 est munie d'au moins un orifice 921 pour le passage du fluide de caloporteur. Elle comporte aussi à son extrémité arrière un alésage 922 de plus grand diamètre pour recevoir un ressort de compression 47 qui, en position désaccouplée, sollicite la pièce en saillie dans l'embout femelle de telle sorte que le fluide ne puisse pas s'écouler hors de la partie 66". L'extrémité arrière du ressort 47 vient en appui contre une bague prévue dans le fond du logement 56 du raccord 50. Les orifices 921 sont positionnés sur la pièce cylindrique de manière qu'en position accouplée, ils se trouvent en coïncidence avec la partie 66" comme représenté sur la figure 10.

D'autre part, la pièce 920 se prolonge par une tige de commande 91. Le corps de contact 68 est monté dans un raccord 50 semblable au raccord 50 de la figure 1.

Sur la partie droite de la figure 10, on a représenté un contact fluidique mâle 5 muni d'un clapet à tiroir coopérant avec le clapet à tiroir du contact fluidique femelle. Dans ce cas, le clapet est constitué par une pièce cylindrique 920' fermée à une extrémité et munie sur son pourtour près de cette extrémité d'au moins un orifice 921', cette pièce étant sollicitée, en position désaccouplée par un ressort 47', vers l'extrémité avant de l'embout mâle qui est alors constitué par une pièce cylindrique 101' munie à son extrémité avant d'un trou dont le diamètre correspond au diamètre de la tige 91. De plus, l'embout mâle 101' présente sur son pourtour au moins un orifice 101" dont la position correspond, lorsque le connecteur est accouplé, à la position de l'orifice 921' du clapet.

Ainsi lors de l'accouplement, la tige 91 coopère avec l'extrémité de la pièce 920' pour repousser les clapets 920 et 920' de manière que les orifices 921' et 101' soient mis en correspondance et que ces orifices et les orifices 921 soient en communication avec la partie 66" pour permettre le passage du fluide comme on le voit clairement sur la figure 10.

Différentes modifications peuvent être apportées à la forme des contacts, des raccords ou des clapets sans sortir du cadre de la présente invention.

REVENDICATIONS

1. Connecteur fluidique miniature s'adaptant dans un connecteur électrique du type comportant une fiche (2) et une embase (4) munies chacune d'alvéoles (135-135'), caractérisé en ce qu'il comporte un contact fluidique mâle (5) et un contact fluidique femelle (3), le contact fluidique mâle (5) étant constitué par un corps de contact (68') permettant le passage du fluide qui est destiné à s'encastrer dans une alvéole (135') de la fiche (2) ou de l'embase (4) du connecteur électrique, le corps de contact se prolongeant d'un côté par un embout mâle (101) et le contact fluidique femelle (3) étant constitué par un corps de contact (68) permettant le passage du fluide, destiné à s'encastrer dans une alvéole (135) de l'autre élément du connecteur électrique, le corps de contact se prolongeant d'un côté par un embout femelle (69) conformé pour recevoir l'embout mâle (101), l'embout mâle et/ou l'embout femelle faisant en partie saillie par rapport à l'extrémité de l'alvéole de sorte que, lors de l'accouplement, les extrémités des alvéoles de la fiche (2) et de l'embase (4) du connecteur électrique soient sensiblement en appui l'une contre l'autre, le corps de contact du contact fluidique mâle (5) comportant une chambre interne (72') destinée à recevoir un dispositif auto-obturant (90') et le corps de contact du contact fluidique femelle (3) comportant une chambre interne (72) destinée à recevoir un dispositif auto-obturant (90).

2. Connecteur fluidique selon la revendication 1, caractérisé en ce que le dispositif auto-obturant est constitué par un clapet (90), un dispositif élastique (47) sollicitant le clapet en position de fermeture pour empêcher le passage de fluide, un moyen (91) pour, lors de l'accouplement, amener le clapet en position d'ouverture pour permettre le passage du fluide et un dispositif d'étanchéité interne (65) pour, en position de fermeture,

empêcher le passage du fluide hors du corps de contact vers l'embout.

3. Connecteur fluidique selon la revendication 2, caractérisé en ce que le clapet (90) est constitué par une jupe (87) coulissant dans la chambre interne (66) du corps de contact et recevant le dispositif élastique (47), ladite jupe se prolongeant par une partie de diamètre inférieur (85), munie d'au moins un orifice (95) sur sa périphérie pour permettre le passage du fluide entre le logement interne de la jupe et la chambre interne (66) du corps de contact (68), ladite partie se terminant par un cône de fermeture (86).

4. Connecteur fluidique selon la revendication 2, caractérisé en ce que le clapet (90) est constitué par une pièce massive (900) montée à l'extrémité d'un arbre de guidage (901) sur lequel est positionné le dispositif élastique, cet arbre de guidage (901) coulissant dans un palier (902) monté dans le corps de contact (68) et muni d'au moins un orifice pour le passage du fluide caloporteur.

5. Connecteur fluidique selon la revendication 2, caractérisé en ce que le clapet est constitué par une bille (910) montée à l'extrémité du dispositif élastique constitué par un ressort à boudin conique (470), le dispositif élastique étant maintenu en position dans le corps de contact par des épaulements (471).

6. Connecteur fluidique selon la revendication 2, caractérisé en ce que le clapet est constitué par un clapet à tiroir (920-921).

7. Connecteur fluidique selon l'une quelconque des revendications 2 à 4 et 6, caractérisé en ce que le moyen pour, lors de l'accouplement, amener le clapet en position d'ouverture pour permettre le passage du fluide est constitué par une tige de commande (91) faisant saillie à partir de l'extrémité du clapet dans l'embout mâle (5) et/ou femelle (3).

8. Connecteur fluidique selon l'une quelconque des revendications 2 à 5, caractérisé en ce que le dispositif d'étanchéité interne est constitué par un joint torique positionné dans une gorge prévue dans le corps de contact près de l'embout mâle ou femelle.

9. Connecteur fluidique selon la revendication 8, caractérisé en ce que la gorge est délimitée par la paroi séparant le corps de l'embout et par un épaulement prévu sur le pourtour de la chambre interne du corps de contact, le diamètre du sommet de l'épaulement étant très légèrement supérieur à celui du contour externe de la partie de clapet correspondante.

10. Connecteur fluidique selon l'une quelconque des revendications précédentes, caractérisé en ce que le corps de contact (68) du contact fluidique mâle ou femelle est maintenu en position dans l'alvéole de la fiche ou de l'embase du connecteur électrique par un clips (143).

11. Connecteur fluidique selon l'une quelconque des revendications précédentes, caractérisé en ce que l'extrémité du corps de contact (68) opposée à celle de l'embout (69) est montée dans un raccord (50) permettant le raccordement à une carte imprimée (1) comportant un échangeur thermique incorporé constitué par un drain présentant un réseau de canalisation (15) pour la circulation d'un fluide caloporteur.

12. Connecteur fluidique selon la revendication 11, caractérisé en ce que le raccord (50) est constitué par une chambre conformée pour recevoir à force l'extrémité du corps de contact, ladite chambre se prolongeant par au moins une conduite débouchant sur un bord du raccord.

# FIG_1

# FIG_2

1/4

0197818

0197818

**FIG_3**

**FIG_7**

**FIG_4**

**FIG_5**

**FIG_6**

## FIG_8

## FIG_9

019781.8

# FIG_10

019781.8

**019781.8**
Numero de la demande

**RAPPORT DE RECHERCHE EUROPEENNE**

Office européen
des brevets

EP   86 40 0530

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| Y | US-A-4 106 523 (THORNTON-LIGHTNER-LANNAN) * Figures 1,4-6; colonne 2, lignes 56-65; colonne 4, lignes 31-57 * | 1 | F 16 L   37/28 |
| A |  | 2,7,11 | |
| Y | FR-E-   76 801  (FRITSCH) * Figures 1-6; résumé * | 1 | |
| A |  | 2-4,7-8 | |
| A | US-A-2 599 935  (PASKER) * Figures 1-3 * | 1,5 | |
| A | FR-A-2 284 254  (STAUBLI S.A.) * Figures; revendication 1 * | 1,6 | DOMAINES TECHNIQUES RECHERCHES (Int Cl 4) F 16 L H 01 R |
| A | DE-A-3 232 367  (DECKEL A.G.) * Figures 2-3 * | 1,2,7, 12 | |

---

Le présent rapport de recherche a été établi pour toutes les revendications

| Lieu de la recherche | Date d'achèvement de la recherche | Examinateur |
|---|---|---|
| LA HAYE | 23-06-1986 | NARMINIO A. |

CATEGORIE DES DOCUMENTS CITES

X . particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& . membre de la même famille, document correspondant

OEB Form 1503 03 82